# EUROPEAN PATENT SPECIFICATION

(11) **EP 3 124 219 B1**
(45) Date of publication and mention of the grant of the patent: **15.05.2024**
(21) Application number: 16180556.9
(22) Date of filing: 21.07.2016
(51) Int. Cl.: B29C 70/52, B29C 70/54, B29C 59/02, B29L 31/08

(54) **IN-LINE PROCESSING OF PRE-FORMED PULTRUDED PRODUCTS FOR USE WITHIN A WIND TURBINE ROTOR BLADE**
IN-LINE-VERARBEITUNG VON GEZOGENEN PRODUKTEN ZUR VERWENDUNG IN EINER WINDTURBINENROTORSCHAUFEL
TRAITEMENT EN LIGNE DE PRODUITS PULTRUDÉS PRÉFORMÉS DESTINÉS À ÊTRE UTILISÉS À L'INTÉRIEUR D'UNE PALE DE ROTOR DE TURBINE ÉOLIENNE

(30) Priority: 30.07.2015 US 201514813518
(43) Date of publication of application: 01.02.2017
(73) Proprietor: LM Wind Power A/S, 6000 Kolding (DK)
(72) Inventor: CARUSO, Christopher Daniel, Greenville, SC 29615 (US); YARBROUGH, Aaron, Greenville, SC South 29615 (US); HYNUM, Daniel Alan, Greenville, SC 29615 (US)
(74) Representative: ZBM Patents - Zea, Barlocci & Markvardsen

(56) References cited:
- EP-A2- 0 753 394
- WO-A1-2013/139346
- WO-A1-2015/067279
- US-A- 4 736 545
- US-A1- 2009 220 747

## Description

The present subject matter relates generally to pultruded products and, more particularly, to a system and method for in-line processing of pre-formed pultruded products for use within a wind turbine rotor blade.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Wind turbine rotor blades typically include an outer body skin or shell formed from a composite laminate material. In general, the body shell is relatively lightweight and has structural properties (e.g., stiffness, buckling resistance and strength) which are not configured to withstand the bending moments and other loads exerted on the rotor blade during operation. In addition, wind turbine blades are becoming increasingly longer in order to produce more power. As a result, the blades must be stiffer and thus heavier so as to mitigate loads on the rotor.

To increase the stiffness, buckling resistance and strength of the rotor blade, the body shell is typically reinforced using one or more structural components (e.g. opposing spar caps with a shear web configured therebetween) that engage the inner surfaces of the shell. The spar caps are typically constructed from laminate composites (e.g., glass fiber laminate composites and/or carbon fiber laminate composites) that include dry or non-cured fabric plies that are laid up within the blade mold and subsequently infused with resin. Such materials, however, can be difficult to control during the manufacturing process and/or are often defect prone and/or highly labor intensive due to handling of the non-cured fabrics and the challenges of infusing large laminated structures.

As such, recent attempts have been made to form spar caps from pre-fabricated, pre-cured laminate composites that can be produced in thicker sections, and are typically less susceptible to defects. For example, it has recently been attempted to use pultruded plates to form wind turbine spar caps. In doing so, the pultruded plates are typically formed using a conventional pultrusion process.

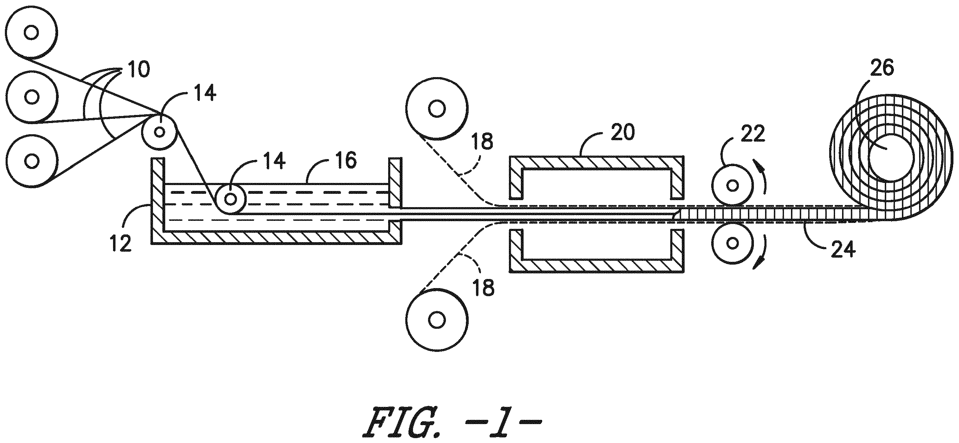

For instance, FIG. 1 illustrates a schematic view of a conventional pultrusion process used for manufacturing pre-formed pultruded products, such as is described in WO 2015/067279, for example. As shown, one or more continuous rolls of reinforced fibers 10 (or woven fiber mats) are fed into a resin impregnator 12 (e.g., via one or more tension rollers 14) that impregnates the fibers 10 with resin 16. Thereafter, a temporary peel ply 18 is applied to either side of the impregnated fibers 10 exiting the resin impregnator 12. The impregnated fibers/peel ply assembly is then pulled through a heated stationary die 20 (e.g., via a pulling mechanism 22), within which the resin undergoes polymerization. The pre-formed pultruded product 24 exiting the heated stationary die 20 is then rolled onto a spool 26 for subsequent storage.

To allow a pultruded product formed using the above-described process to be further processed and/or used to manufacture a wind turbine blade component, the peel ply must be initially removed from the underlying fiber-reinforced polymer product. Typically, the removal process is both labor- and time-intensive, with each peel ply being required to be manually pulled off of the underlying product. As a result, the use of peel plies to provide a desired surface finish significantly increases the overall costs associated with manufacturing finished pultruded plates.

Moreover, the heated die used during the pultrusion process is typically only capable of forming a pultruded product having a given thickness and width. Thus, to produce a pultruded product having a different thickness and/or width, a separate die must be used that has suitable dimensions designed to produce a product having the desired thickness and width. The use of such separate dies significantly increases the overall manufacturing costs associated with producing pultruded products having differing dimensions.

Accordingly, a system and method for in-line processing of pre-formed pultruded products that addresses one or more of the problems identified above in the prior art would be welcomed in the technology.

Various aspects and advantages of the invention will be set forth in part in the following description, or may be clear from the description, or may be learned through practice of the invention.

The present invention is defined by claim 1.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a schematic view of a conventional pultrusion process used for manufacturing pre-formed pultruded products;
FIG. 2 illustrates a schematic view of one embodiment of a system for in-line processing of pre-formed pultruded products in accordance with aspects of the present subject matter;
FIG. 3 illustrates a schematic view of one embodiment of a suitable component(s) for machining a chamfer into a pre-formed pultruded product along its widthwise direction as it is being transported in a processing direction through the system shown in FIG. 2;
FIG. 4 illustrates a side view of the pre-formed pultruded product shown in FIG. 3 after such product has been cut along its widthwise direction;
FIG. 5 illustrates a perspective view of one embodiment of a suitable component(s) for cutting a pre-formed pultruded product lengthwise as it is being transported in a processing direction through the system shown in FIG. 2;
FIG. 6 illustrates a schematic view of another embodiment of a system for in-line processing of pre-formed pultruded products in accordance with aspects of the present subject matter, particularly illustrating the system components positioned immediately downstream of one or more of the component(s) shown in FIG. 1 used to manufacture the pre-formed pultruded product;
FIG. 7 illustrates a perspective view of a portion of a pre-cured pultrusion product, particularly illustrating the combination of fibers and resin included within the product; and
FIG. 8 illustrates a flow diagram of one embodiment of a method for in-line processing of pre-formed pultruded products in accordance with aspects of the present subject matter.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to a system and method for in-line processing of pre-formed pultruded products to be used within a wind turbine rotor blade. Specifically, in several embodiments, the disclosed system and method adds one or more in-line processing stations or steps that allow a pre-formed pultruded product to be prepared, machined and/or otherwise processed for subsequent use within a rotor blade as a finished pultruded plate. For example, in one embodiment, the system may include a plurality of in-line processing stations positioned immediately downstream of a dispenser spool from which a pre-formed pultruded product is being dispensed, such as a surface preparation station, one or more widthwise machining stations and/or a lengthwise machining station. A different machining technique and/or process may be used at each in-line processing station to prepare the pre-formed pultruded product for use within a rotor blade.

For example, the in-line surface preparation station disclosed herein may be utilized to roughen the outer surface of the pre-formed pultrusion product (e.g., using mechanical or chemical abrasion). Specifically, the surface preparation station can be used to roughen the outer surface of the pre-formed pultrusion product to a desired surface roughness for creating a sufficient bonding interface between subsequently assembled pultruded plates. Thus, such in-line surface roughening may be used as an alternative to conventional peel plies, thereby eliminating the time-intensive, manual peel ply removal process and reducing overall manufacturing costs.

Similarly, the in-line widthwise machining station(s) disclosed herein may be configured to cut and/or chamfer the pre-formed pultruded product along its widthwise direction. For instance, the widthwise machining station(s) may be configured to chamfer the pre-formed pultruded product such that the product defines a tapered thickness that narrows or reduces in the direction of the anticipated widthwise cut location for the product. In addition, the widthwise machining station(s) may also be configured to cut the pre-formed pultruded product across its width at the anticipated cut location to create a pultruded plate having a desired length.

Additionally, the in-line lengthwise cutting station disclosed herein may be configured to cut the pre-formed pultruded product (or the previously cut pultruded plate when the cutting station is positioned downstream of the widthwise matching station) along its lengthwise direction. As such, a pre-formed pultruded product (or pultruded plate) having an initial width may be cut into two or more plates defining widths that are less than the initial width. For instance, in one embodiment, a pultruded plate having an initial width may be cut down the center along its lengthwise direction to create two separate plates, with each plate defining a width that is equal to one-half of the initial width.

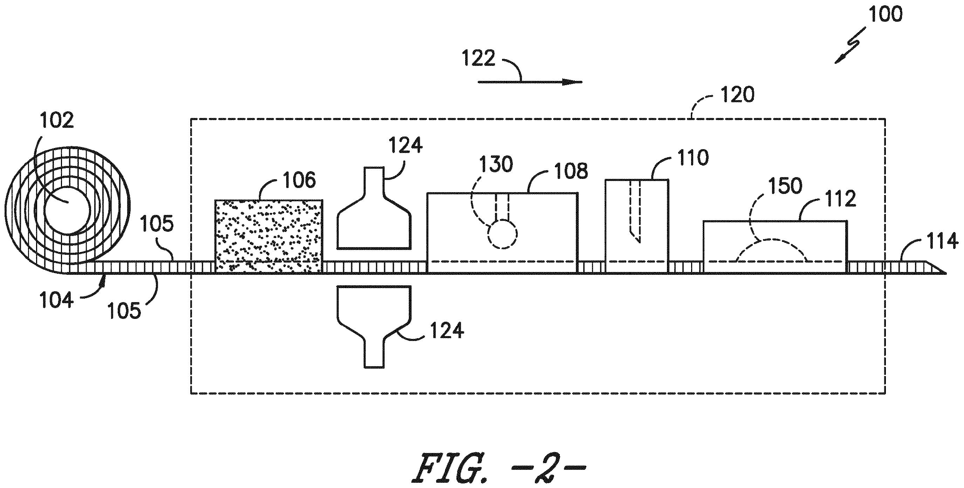

Referring now to FIG. 2, a schematic view of one embodiment of a system 100 for in-line processing of pre-formed pultruded products is illustrated in accordance with aspects of the present subject matter. As shown, the system 100 includes a dispenser spool 102 carrying a pre-formed pultruded product 104 thereon, a surface preparation station 106, a widthwise chamfering station 108, a widthwise cutting station 110 and a lengthwise cutting station 112. At each station 106, 108, 110, 112, the pre-formed pultruded product 104 may be machined or otherwise processed such that a final pultruded plate(s) 114 is produced that is ready to be used to form a wind turbine rotor blade component.

It should be appreciated that, although the various stations 106, 108, 110, 112 will generally be described herein with respect to the differing processing steps implemented by each station, such stations 106, 108, 110, 112 may form part of a single piece of equipment. For example, as shown in the dashed lines in FIG. 2, each station 106, 108, 110, 112 may be integrated into a single machine 120 that includes suitable components for performing the various processing steps described herein. Alternatively, each station 106, 108, 110, 112 may be integrated into a separate piece of equipment, with the pieces of equipment used to implement the various stations being positioned along a travel path of the pre-formed pultruded product 104 as it is unwound from the dispenser spool 102 such that a continuous in-line assembly is provided for processing the pre-formed pultruded product 104.

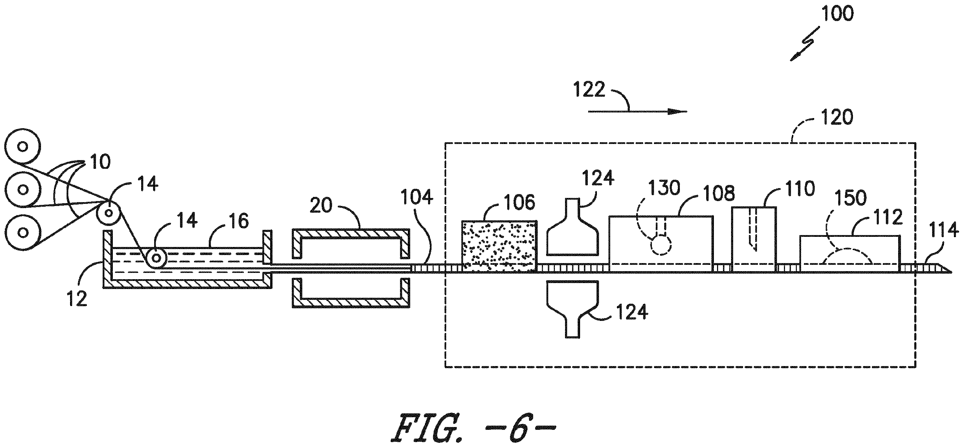

As shown in FIG. 2, the pre-formed pultruded product 104 may be initially wound or wrapped around the dispenser spool 102. In general, it should be appreciated that the pre-formed pultruded product 104 may be formed using any suitable pultrusion process known in the art. For example, in several embodiments, the pre-formed pultruded product 104 may be formed using a process similar to that described above with reference to FIG. 1. However, in accordance with aspects of the present subject matter, the pre-formed pultruded product 104 need not include the peel plies 18 described above. Thus, when implementing the pultrusion process shown in FIG. 1, the impregnated fibers 10 exiting the resin impregnator 12 may be pulled directly through the heated stationary die 20 without application of the peel plies 18 (e.g., similar to that shown in FIG. 6). The resulting pre-formed pultruded product 104 may then be wound around a suitable spool, such as the dispenser spool 102 shown in FIG. 2.

As shown in FIG. 2, the pre-formed pultruded product 104 is unwound or pulled from the dispenser spool 102 along a travel path extending in a processing direction (indicated by arrow 122), with each station 106, 108, 110, 112 being positioned on the travel path to allow the pre-formed pultruded product 104 to be processed as it is moved along the line in the processing direction 122. In several embodiments, the various stations 106, 108, 110, 112 of the disclosed system 100 may be arranged or ordered in a particular manner along the travel path of the pre-formed pultruded product 104. For example, as shown in FIG. 2, in one embodiment, the surface preparation station 106 may be immediately downstream of the dispenser spool 102, followed by the widthwise chamfering station 108, the widthwise cutting station 110 and the lengthwise cutting station 112. In another embodiment, the lengthwise cutting station 112 may be immediately downstream of the dispenser spool 102, followed by the widthwise chamfering station 108, the widthwise cutting station 110 and the surface preparation station 106. Alternatively, the various stations 106, 108, 110, 112 may be provided in any other suitable arrangement or order that allows the pre-formed pultruded product 104 to be processed in a manner consistent with the disclosure provided herein.

In the illustrated embodiment, the pre-formed pultruded product 104 unwound from the dispenser spool 102 is directed in the processing direction 122 into the surface preparation station 106. In general, the surface preparation station 106 may correspond to and/or include any suitable component(s), equipment and/or the like that allows an outer surface(s) 105 of the pre-formed pultruded product 104 to be roughened or knurled. As is generally understood, such a roughened or knurled outer surface provides a suitable interface for bonding or joining two separate pultruded plates to one another. Thus, the surface roughening provided by the surface preparation station 104 may allow two or more pultruded plates 114 created using the disclosed system 100 to be bonded or joined together to form a wind turbine rotor blade component. For example, the pultruded plates 114 may be stacked one on top of the other to form a spar cap of a rotor blade, with the stacked plates 114 being subsequently infused with resin to join the plates 114 together. In such instance, the roughened outer surfaces of the pultruded plates 114 may provide enhanced bonding strength between the adjacent, infused plates 114.

In several embodiments, the surface preparation station 106 may be configured to roughen the outer surface(s) 105 of the pre-formed pultruded product 104 via mechanical abrasion. For instance, in a particular embodiment, the surface preparation station 106 may include or correspond to an abrasive blasting chamber that utilizes a blasting media to roughen the outer surface(s) 105 of the pre-formed pultruded product 104 as it is transported through the chamber in the processing direction 122. Suitable blasting media may include sand, beads (e.g., glass beads), carbide particles and/or any other suitable blasting material. Alternatively, the surface preparation station 106 may include or incorporate a rotary abrasion device configured to rotationally contact the outer surface(s) 105 of the pre-formed pultruded product 104 as it is transported in the processing direction 122, thereby allowing the rotary abrasion device to roughen the outer surface(s) 105. For instance, the rotary abrasion device may correspond to a grinding disc, bristled rotary tool (e.g., a rotary wheel including high-carbon steel wire bristles attached thereto) or any other suitable rotary abrasion device.

In other embodiments, the surface preparation station 106 may be configured to roughen the outer surface(s) 105 of the pre-formed pultruded product 104 using a chemical abrasion process. For example, the surface preparation station may include or correspond to a chamber within which a suitable chemical(s) may be applied to the outer surface(s) 105 to the pre-formed pultruded product 104 such that a chemical reaction occurs that corrodes or roughens the outer surface(s) 105 as desired.

It should be appreciated that the desired surface roughness for the pultruded plates 114 formed in accordance with aspects of the present subject matter may generally vary depending on the specific application within which the plates are being utilized.

As shown in FIG. 2, a secondary processing station 124 is provided immediately downstream of the surface preparation station 106. For example, in instances in which the surface preparation station 106 is configured to roughen the outer surface(s) 105 via mechanical abrasion, the secondary processing station 124 corresponds to a vacuuming station that includes one or more vacuums configured to remove any fine particulates and/or any blasting media remaining on the outer surface(s) 105 of the pre-formed pultruded plate 104 following the surface preparation station 106. Similarly, in instances in which the surface preparation station 106 is configured to roughen the outer surface(s) 105 via a chemical abrasion process, the secondary processing station 124 corresponds to a drying station including one or more dryers configured to dry the outer surface(s) 105 of the pre-formed pultruded product 104.

Additionally, as indicated above, the disclosed system 100 also includes a widthwise chamfering station 108 (e.g., location downstream of the surface preparation station 106). In general, the widthwise chamfering station 108 may be configured to chamfer the pre-formed pultruded product 104 across its width at anticipated cut locations defined along its length such that the pre-formed pultruded product 104 defines a tapered thickness along either side of such anticipated cut locations. As a result, when the pre-formed pultruded product 104 is subsequently cut along its width, the resulting "cut" plates may include lengthwise ends having tapered profiles.

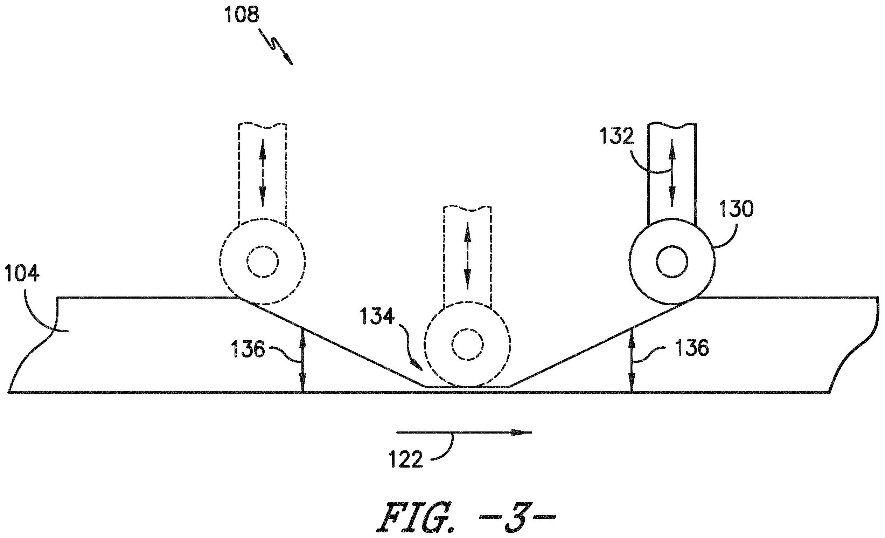

In general, the widthwise chamfering station 108 may include or incorporate any suitable component(s) that allows the pre-formed pultruded product 104 to be chamfered or otherwise machined as described herein. For instance, in one embodiment, the widthwise chamfering station 108 may utilize a linearly actuated grinding disc or wheel 130 to chamfer the pre-formed pultruded product 104 as it is moved relative to the grinding wheel 130 in the processing direction 122 along its travel path. An example of such an embodiment is illustrated schematically in FIG. 3. As shown in FIG. 3, as the pre-formed pultruded product 104 is moved in the processing direction 122, a grinding wheel 130 may be linearly actuated relative to the pre-formed pultruded product 104 in a direction (indicated by arrow 132) perpendicular to the processing direction 122, such as the vertical direction, to create a tapered profile in the pre-formed pultruded product 104 along either side of an anticipated cut location 134 for the product 104. Specifically, as shown in FIG. 3, a thickness 136 of the pre-formed pultruded product 104 may be tapered via the grinding wheel 130 such that the thickness 136 generally reduces in the direction of the anticipated cut location 124.

It should be appreciated that the anticipated cut location 134 may generally correspond to the location at which the pre-formed pultruded product 104 is desired to be cut across its width so as to create a pultruded plate have a given length (e.g., a length measured in the processing direction 122). For instance, if the pultruded plate(s) 114 being manufactured using the disclosed system 100 will be used to form a spar cap for a wind turbine rotor blade, the cut location 134 may be selected so as to create a pultruded plate(s) 114 having a suitable spanwise length for forming the spar cap.

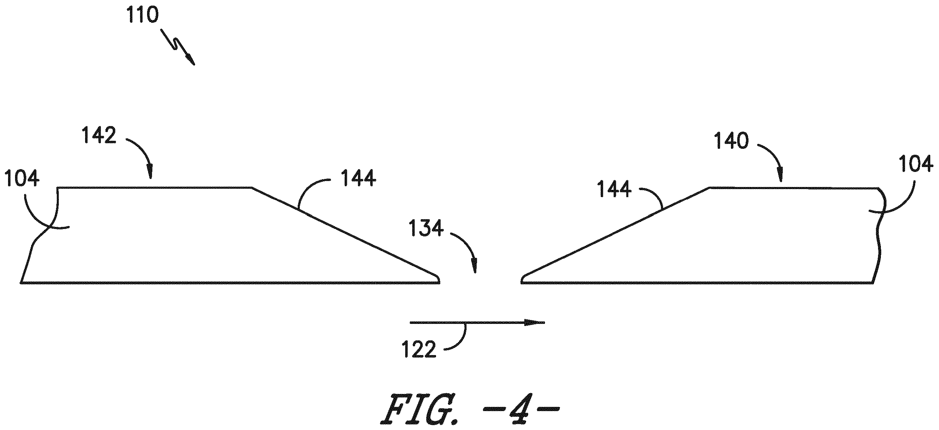

Referring back to FIG. 2, in several embodiments, the widthwise cutting station 110 may be positioned immediately downstream of the widthwise chamfering station 108. In general, the widthwise cutting station 110 may be configured to cut the chamfered, pre-formed pultruded product 104 at the anticipated cut location 132 such that the portion of the pre-formed pultruded product 104 located downstream of the widthwise cutting station 110 is separated from the portion of the pre-formed pultrusion product 104 located upstream of the widthwise cutting station 110, thereby creating a separate pultruded plate having tapered ends. For example, FIG. 4 illustrates the chamfered, pre-formed pultruded product 104 after such product has been cut across its width. As shown, the downstream portion of the pre-formed pultruded product 104 (indicated by arrow140) has been separated from the upstream portion of the pre-formed pultruded product 104 (indicated by arrow 142) at the cut location 134, with each cut portion of the pre-formed pultruded product 104 including a tapered end 144 adjacent to the cut location 134.

It should be appreciated that, in general, the widthwise cutting station 110 may include and/or correspond to any suitable component(s), equipment and/or the like that is configured to cut the pre-formed pultruded product 104 across its width. For instance, widthwise cutting station 110 may include or correspond to a cutting wheel, a press-cutting device and/or any other suitable cutting means.

It should also be appreciated that, in certain embodiments of the present subject matter, the widthwise chamfering station 108 may also serve as the widthwise cutting station 110. For instance, in the embodiment shown in FIG. 3, the grinding wheel 130 may be configured to grind through the entirety of the thickness 136 of the pre-formed pultruded product 104 at the anticipated cut location 134. In such an embodiment, the disclosed system 100 need not include any separate component(s) and/or equipment for cutting the pre-formed pultruded product 104 across its width.

Referring still to FIG. 2, in several embodiments, the lengthwise cutting station 112 may be positioned immediately downstream of the widthwise chamfering/cutting station(s) 108, 110. In general, the lengthwise cutting station 112 may be configured to cut the chamfered and cut pre-formed pultruded product 104 along its length two create two or more chamfered pultruded plates 114. Specifically, one or more cutting devices 150, such as a table saw, water jet, band saw and/or the like, may be positioned along the travel path of the pre-formed pultruded product 104 such that, as the product is moved in the processing direction 122 relative to the cutting device(s) 150, the product is cut lengthwise into two or more plates.

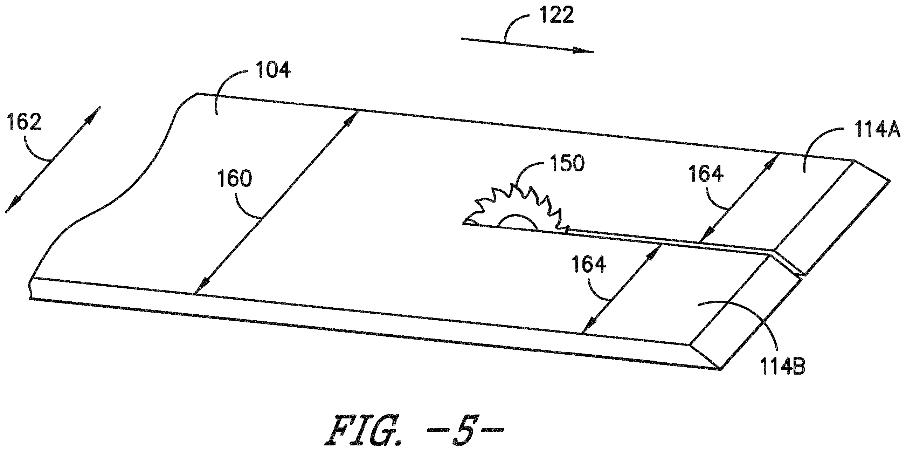

For example, FIG. 5 illustrates a simplified, perspective view of one embodiment of the pre-formed pultruded product 104 as it is being cut lengthwise into two separate plates 114A, 114B. As shown in FIG. 5, the pre-formed pultruded product 104 defines an initial width 160 along the widthwise direction of the product (indicated by arrow 162). Additionally, as shown in FIG. 5, a cutting device 150 is positioned directly in the center of the pre-formed pultruded product 104 along its widthwise direction 162. Thus, as the pre-formed pultruded product 104 is moved relative to the cutting device 150 in the processing direction 122, the pre-formed pultruded product 104 is cut lengthwise in-half to produce two separate pultruded plates 114A, 114B, with each plate 114A, 114B defining a width 164 that is substantially equal to one-half of the initial width 160 of the pre-formed pultruded product 104.

In other embodiments, the cutting device 150 may be offset from the center of the pre-formed pultruded product 104 such that two separate pultruded plates are created that define differing widths (with the sum of such differing widths being substantially equal to the initial width 160 of the product 104). Alternatively, two or more cutting devices 150 may be located at different widthwise locations relative to the pre-formed pultruded product 104 such that three or more separate pultruded plates are created as the pre-formed pultruded product 104 is cut lengthwise via the cutting devices 150.

As indicated above, the roughened, chamfered and cut pultruded plates 114 creating using the disclosed system 100 may then be utilized to form a wind turbine rotor blade component. For instance, in several embodiments, an assembly of the pultruded plates 114 may be used to form a spar cap for a wind turbine rotor blade that extends along the span of the rotor blade between the blade root and the blade tip.

It should be appreciated that, as opposed to being separated from the process used to initially manufacture the pre-formed pultruded product 104, the disclosed system 100 may also be provided in-line with such initial manufacturing processes to form a continuous in-line manufacturing process that starts with the initial fibers used to form the product 104 and ends with the roughened, chamfered and cut pultruded plates 114. For instance, FIG. 6illustrates an embodiment of the disclosed system 100 in which the various stations 106, 108, 110, 112, 124 described above with the reference to FIG. 2 are positioned immediately downstream of the pultrusion process-related components described above with reference to FIG. 1. Specifically, as shown in FIG 6, after the rolls of fibers 10 are fed into the resin impregnator 12, the impregnated fibers 10 are then pulled through the heated stationary die 20 to create the pre-formed pultruded product 104. The pre-formed pultruded product 104 may then be immediately fed through one or more stations of the disclosed system 100, such as the surface preparation station 106, the secondary processing station 124, the widthwise chamfering station 108, the widthwise cutting station 110 and/or the lengthwise cutting station 112, to produce finished pultruded plates 114 that may be used to manufacture rotor blade components.

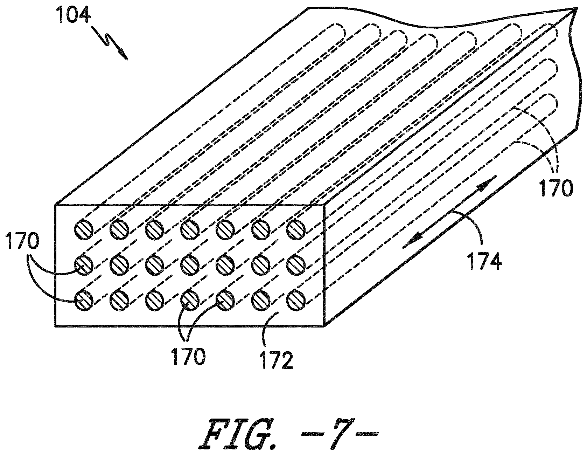

It should also be appreciated that, as indicated above, the pre-formed pultruded product 104 described herein may generally include a combination of fibers and resin. For instance, FIG. 7 illustrates a perspective view of a portion of the pre-formed pultruded product 104 described above. As shown in FIG. 7, the pre-formed pultruded product 104 includes a plurality of fibers 170 (e.g., glass or carbon fibers) surrounded by or jointed together via a resin material 172. Additionally, as shown in FIG. 7, the fibers 170 included within the pre-formed pultruded product 104 may generally be oriented in a common fiber direction 174. In several embodiments, the fiber direction 174 may extend generally parallel to the longitudinal or lengthwise direction of the pre-formed pultruded product 104, which may also be generally parallel to the above-described processing direction 122.

Additionally, it should be appreciated that the resin 172 described herein may generally correspond to any suitable resin material, including a thermoplastic material and/or a thermoset material. As used herein, thermoplastic materials generally encompass a plastic material or polymer that is reversible in nature. For example, thermoplastic materials typically become pliable or moldable when heated to a certain temperature and solidify upon cooling. Further, thermoplastic materials may include amorphous thermoplastic materials and/or semi-crystalline thermoplastic materials. For example, some amorphous thermoplastic materials may generally include, but are not limited to styrenes, vinyls, cellulosics, polyesters, acrylics, polysulphones, and/or imides. More specifically, example amorphous thermoplastic materials may include polystyrene, acrylonitrile butadiene styrene (ABS), polymethyl methacrylate (PMMA), glycolised polyethylene terephthalate (PET-G), polycarbonate, polyvinyl acetate, amorphous polyamide, polyvinyl chlorides (PVC), polyvinylidene chloride, polyurethane, or similar. In addition, example semi-crystalline thermoplastic materials may generally include, but are not limited to polyolefins, polyamides, fluropolymer, ethyl-methyl acrylate, polyesters, polycarbonates, and/or acetals. More specifically, example semi-crystalline thermoplastic materials may include polybutylene terephthalate (PBT), polyethylene terephthalate (PET), polypropylene, polyphenyl sulfide, polyethylene, polyamide (nylon), polyetherketone, or similar. Further, as used herein, thermoset materials generally encompass a plastic material or polymer that is non-reversible in nature. For example, thermoset materials, once cured, cannot be easily remolded or returned to a liquid state. As such, after initial forming, thermoset materials are generally resistant to heat, corrosion, and/or creep. Example thermoset materials may generally include, but are not limited to, some polyesters, esters, epoxies, or similar.

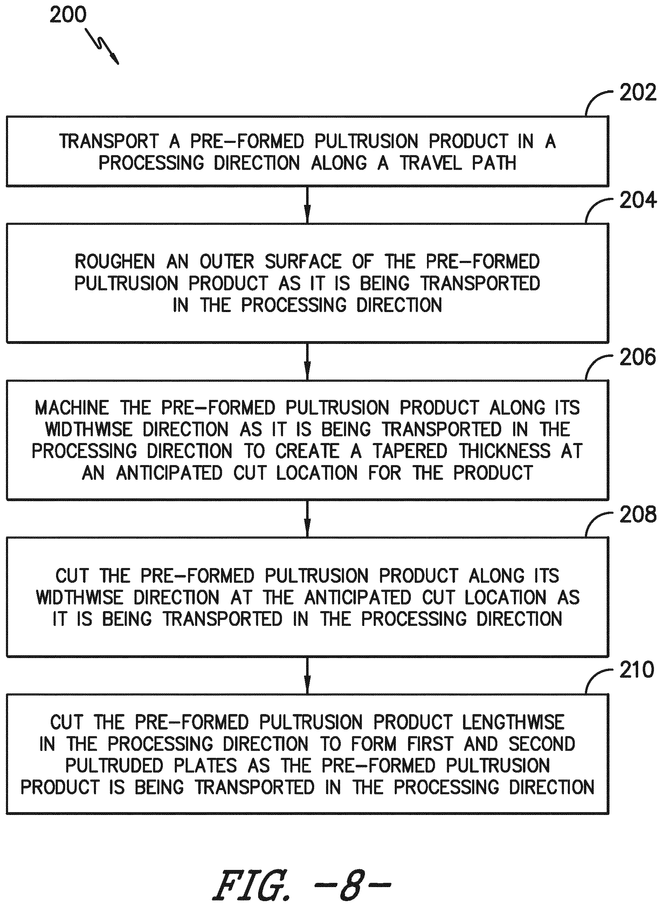

As indicated above, the present subject matter is also directed to various methods for in-line processing of pre-formed pultruded products. For example, FIG. 8 illustrates a flow diagram of one embodiment of a method 200 for in-line processing of pre-formed pultruded products in accordance with aspects of the present subject matter. In general, the method 200 will be described herein with reference to the system(s) 100 described above with reference to FIGS. 2-5. However, it should be appreciated by those of ordinary skill in the art that the disclosed method 200 may be implemented within any other system, including systems having any other suitable combination of the various stations described above. In addition, although FIG. 8 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 8, at (202), the method 200 includes transporting a pre-formed pultruded product in a processing direction along a travel path. Specifically, as indicated above, the pre-formed pultruded product 104 may be moved, pulled or otherwise transported in a processing direction 122 along a travel path aligned within the various processing stations. In such an embodiment, the pre-formed pultruded product 104 may derive, for example, from a dispenser spool 102 (e.g., as shown in FIG. 2) or from a stationary die 20 (e.g., as shown in FIG. 6).

Additionally, at (204), the method 200 includes roughening an outer surface of the pre-formed pultruded product as the product is being transported in the processing direction. For example, as indicated above, a surface preparation station 106 may be provided for roughening the outer surface(s) 105 of the pre-formed pultruded product 104 via mechanical abrasion, such as by using a blasting media within an abrasion blasting chamber to roughen the outer surface(s) 105 or by using a rotary abrasion device. Alternatively, the outer surface(s) 105 of the pre-formed pultruded product 104 may be roughened using a chemical abrasion process.

Moreover, at (206), the method 200 includes machining the pre-formed pultruded product along its widthwise direction as the product is being transported in the processing direction to create a tapered thickness at an anticipated cut location for the pre-formed pultruded product. For example, as indicated above, a grinding wheel 130 or other suitable chamfering device may be utilize to grind or machine the pre-formed pultruded product 104 along its widthwise direction 162 at the anticipated cut location 134 such that the pre-formed pultruded product 104 defines a tapered thickness both upstream and downstream of the anticipated cut location 134.

Referring still to FIG. 8, at (208), the method 200 includes cutting the pre-formed pultruded product along its widthwise direction at the anticipated cut location as the product is being transported in the processing direction. As indicated above, such widthwise cutting of the pre-formed pultruded 104 may, in certain embodiments, be performed simultaneously with the product 104 being chamfered. Alternatively, the pre-formed pultruded product 104 may be cut along its widthwise direction 162 as a separate processing step.

Additionally, at (210), the method 200 includes cutting the pre-formed pultruded product lengthwise in the processing direction to form first and second pultruded plates as the product is being transported in the processing direction. For instance, as indicated above, one or more cutting device(s) 150 may be positioned along the travel path of the pre-formed pultruded product 104 that are configured to cut the product 104 lengthwise along the processing direction 122, thereby creating two or more separate pultruded plates 114A, 114B having widths 164 that are less than the initial width 160 of the pre-formed pultruded product 104.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method (200) for in-line processing of pre-formed pultruded products to be used within a wind turbine rotor blade, the method comprising:
transporting a pre-formed pultruded product in a processing direction along a travel path, the pre-formed pultruded product including a combination of fibers and resin, the pre-formed pultrusion product extending lengthwise in the processing direction and defining an initial width in a widthwise direction;
roughening (204) an outer surface of the pre-formed pultruded product as the pre-formed pultruded product is being transported in the processing direction along the travel path;
after roughening the outer surface of the pre-formed pultruded product, vacuuming or drying the outer surface of the pre-formed pultruded product, and
cutting (208) the pre-formed pultruded product lengthwise in the processing direction to form first and second pultruded plates as the pre-formed pultruded product is being transported in the processing direction along the travel path, each of the first and second pultruded plates defining a width in the widthwise direction that is less than the initial width of the pre-formed pultruded product.

2. The method (200) of claim 1, wherein roughening the outer surface of the pre-formed pultruded product comprises roughening the outer surface via mechanical abrasion or using a chemical abrasion process.

3. The method (200) of any preceding claim, wherein cutting the pre-formed pultruded product lengthwise along the processing direction comprises cutting the pre-formed pultruded product lengthwise along the processing direction using a cutting device positioned along the travel path of the pre-formed pultruded product.

4. The method (200) of any preceding claim, further comprising machining (206) the pre-formed pultruded product along the widthwise direction at an anticipated cut location as the pre-formed pultruded product is being transported in the processing direction along the travel path such that a thickness of the pre-formed pultruded product is tapered.

5. The method (200) of claim 4, wherein machining (206) the pre-formed pultruded product along the widthwise direction comprises linearly actuating a grinding wheel relative to the pre-formed pultruded product in a direction generally perpendicular to the processing direction as the pre-formed pultruded product is being transported in the processing direction along the travel path.

6. The method (200) of any preceding claim, further comprising cutting (208) the pre-formed pultruded product along the widthwise direction at the anticipated cut location as the pre-formed pultruded product is being transported in the processing direction along the travel path.

## Patentansprüche

1. Ein Verfahren (200) zur Inline-Verarbeitung von vorgeformten pultrudierten Produkten, die in einem Windturbinenrotorblatt verwendet werden sollen, wobei das Verfahren Folgendes umfasst:
transportieren eines vorgeformten pultrudierten Produkts in einer Verarbeitungsrichtung entlang eines Bewegungswegs, wobei das vorgeformte pultrudierte Produkt eine Kombination aus Fasern und Harz beinhaltet, wobei sich das vorgeformte Pultrusionsprodukt in Längsrichtung in der Verarbeitungsrichtung erstreckt und eine anfängliche Breite in einer Breitenrichtung definiert;
aufrauhen (204) einer Außenfläche des vorgeformten pultrudierten Produkts, während das vorgeformte pultrudierte Produkt in der Verarbeitungsrichtung entlang des Bewegungswegs transportiert wird;
nach dem Aufrauhen der Außenfläche des vorgeformten pultrudierten Produkts, Absaugen oder Trocknen der Außenfläche des vorgeformten pultrudierten Produkts und
schneiden (208) des vorgeformten pultrudierten Produkts in Längsrichtung in der Verarbeitungsrichtung, um erste und zweite pultrudierte Platten zu bilden, während das vorgeformte pultrudierte Produkt in der Verarbeitungsrichtung entlang des Bewegungswegs transportiert wird, wobei jede der ersten und zweiten pultrudierten Platten eine Breite in der Breitenrichtung definiert, die geringer als die anfängliche Breite des vorgeformten pultrudierten Produkts ist.

2. Das Verfahren (200) von Anspruch 1, wobei das Aufrauen der Außenfläche des vorgeformten pultrudierten Produkts das Aufrauen der Außenfläche durch mechanischen Abrieb oder unter Verwendung eines chemischen Abriebprozesses umfasst.

3. Das Verfahren (200) von einem der vorhergehenden Ansprüche, wobei das Schneiden des vorgeformten pultrudierten Produkts in Längsrichtung entlang der Verarbeitungsrichtung das Schneiden des vorgeformten pultrudierten Produkts in Längsrichtung entlang der Verarbeitungsrichtung unter Verwendung einer Schneidvorrichtung umfasst, die entlang des Bewegungswegs des vorgeformten pultrudierten Produkts positioniert ist.

4. Das Verfahren (200) von einem der vorhergehenden Ansprüche, ferner umfassend das Bearbeiten (206) des vorgeformten pultrudierten Produkts entlang der Breitenrichtung an einer erwarteten Schnittposition, während das vorgeformte pultrudierte Produkt in der Verarbeitungsrichtung entlang des Bewegungswegs transportiert wird, sodass sich eine Dicke des vorgeformten pultrudierten Produkts verjüngt.

5. Das Verfahren (200) von Anspruch 4, wobei das Bearbeiten (206) des vorgeformten pultrudierten Produkts entlang der Breitenrichtung das lineare Betätigen einer Schleifscheibe relativ zu dem vorgeformten pultrudierten Produkt in einer Richtung umfasst, die im Allgemeinen senkrecht zu der Verarbeitungsrichtung ist, während das vorgeformte pultrudierte Produkt in der Verarbeitungsrichtung entlang des Bewegungswegs transportiert wird.

6. Das Verfahren (200) von einem der vorhergehenden Ansprüche, ferner umfassend das Schneiden (208) des vorgeformten pultrudierten Produkts entlang der Breitenrichtung an der erwarteten Schnittposition, während das vorgeformte pultrudierte Produkt in der Verarbeitungsrichtung entlang des Bewegungswegs transportiert wird.

## Revendications

1. Un procédé (200) de traitement en ligne de produits pultrudés préformés à utiliser dans une pale de rotor d'éolienne, le procédé comprenant :
transporter un produit pultrudé préformé dans une direction de traitement le long d'un chemin de déplacement, le produit pultrudé préformé comprenant une combinaison de fibres et de résine, le produit pultrudé préformé s'étendant selon la direction de la longueur dans la direction de traitement et définissant une largeur initiale selon la direction de la largeur ;
rendre rugueuse (204) une surface extérieure du produit pultrudé préformé lorsque le produit pultrudé préformé est transporté dans la direction de traitement le long du chemin de déplacement ;
après avoir rendu rugueuse la surface extérieure du produit pultrudé préformé, aspirer ou sécher la surface extérieure du produit pultrudé préformé, et
découper (208) le produit pultrudé préformé selon la direction de la longueur dans la direction de traitement pour former des première et seconde plaques pultrudées lorsque le produit pultrudé préformé est transporté dans la direction de traitement le long du chemin de déplacement, chacune des première et seconde plaques pultrudées définissant une largeur selon la direction de la largeur qui est inférieure à la largeur initiale du produit pultrudé préformé.

2. Le procédé (200) de la revendication 1, dans lequel rendre rugueuse la surface externe du produit pultrudé préformé comprend rendre rugueuse la surface externe par abrasion mécanique ou en utilisant un processus d'abrasion chimique.

3. Le procédé (200) de l'une quelconque des revendications précédentes, dans lequel découper le produit pultrudé préformé selon la direction de la longueur le long de la direction de traitement comprend la découpe du produit pultrudé préformé selon la direction de la longueur le long de la direction de traitement à l'aide d'un dispositif de découpe positionné le long du chemin de déplacement du produit pultrudé préformé.

4. Le procédé (200) de l'une quelconque des revendications précédentes, comprenant en outre l'usinage (206) du produit pultrudé préformé le long de la direction de la largeur à un emplacement de découpe anticipé lorsque le produit pultrudé préformé est transporté dans la direction de traitement le long du chemin de déplacement de telle sorte qu'une épaisseur du produit pultrudé préformé est effilée.

5. Le procédé (200) de la revendication 4, dans lequel l'usinage (206) du produit pultrudé préformé selon la direction de la largeur comprend l'actionnement linéaire d'une meule par rapport au produit pultrudé préformé dans une direction généralement perpendiculaire à la direction de traitement lorsque le produit pultrudé préformé est transporté dans la direction de traitement le long du chemin de déplacement.

6. Le procédé (200) de l'une quelconque des revendications précédentes, comprenant en outre la découpe (208) du produit pultrudé préformé le long de la direction de la largeur à l'emplacement de découpe anticipé lorsque le produit pultrudé préformé est transporté dans la direction de traitement le long du chemin de déplacement.
